# DEMANDE DE BREVET EUROPEEN

(11) **EP 2 108 450 A1**
(43) Date de publication de la demande: **14.10.2009**
(21) Numéro de dépôt: 08154368.8
(22) Date de dépôt: 11.04.2008
(51) Int. Cl.: B01L 3/02, F16J 15/32

(54) **Joint pour dispositif de dosage de liquides**

(71) Demandeur: Socorex Isba S.A., 1024 Ecublens (CH)
(72) Inventeur: Uldry, Jean-Pierre, 1093 La Conversion (CH)
(74) Mandataire: Schneiter, Sorin

(57) **Abrégé**

La présente invention concerne un dispositif de dosage manuel de liquides, par exemple une pipette ou un bouton doseur. Le dispositif comporte un joint formant une étanchéité entre un cylindre creux et un piston logé à l'intérieur du cylindre, le piston étant déplacé verticalement pour effectuer l'aspiration ou l'éjection du liquide. Lors du dosage, le joint reste fixe par rapport au déplacement du piston et comprend des parties formées de portions à caractéristiques géométriques et mécaniques dédiées permettant d'optimiser localement les fonctions de glissement, étanchéité et de fixation dans le cylindre.

## Description

### Domaine de l'invention

La présente invention concerne un dispositif de dosage de liquides, en particulier dans un laboratoire. Elle concerne donc plus particulièrement le dosage de liquides en quantités relativement petites mais exactes, par exemple de l'ordre du µl jusqu'à 100 ml. Plus particulièrement, l'invention concerne une pipette, un doseur pour bouteille ou une seringue.

### Etat de la technique et problèmes à l'origine de l'invention

Le document US 2002/0012613 décrit, dans son introduction, les problèmes liés au dosage de liquides à l'aide d'un appareil de laboratoire, par exemple une pipette. Lors du travail en laboratoire de recherche ou lors de dosages de routine en milieu biomédical ou industriel, l'utilisateur d'une pipette peut être amené à exécuter un très grand nombre de manipulations d'aspiration et d'éjection de liquide. Le travail de pipetage étant répétitif, il engendre, chez l'utilisateur, de la fatigue, puis des crispations et, selon le document US 2002/0012613, même des lésions. Des exemples de lésions sont le dysfonctionnement de certains membres supérieurs (Upper Limb Disorder ULD), des traumatismes liés à des tensions répétitives (Repetitive Strain Injury RSI), le dysfonctionnement des muscles et du squelette de la main et du poignet (musculo-skeletal disorders of the hand and wrist), la tendinite de certains muscles (tendonitis of the flexor and extensor muscles), l'arthrose (osteoarthritis of the basal joint of thumb), et le syndrome du tunnel carpien.

Des nombreux efforts ont été entrepris pour diminuer la fatigue lors du dosage répétitif. Le document US 2002/0012613 peut être cité comme exemple pour une approche qui concerne l'ergonomie de l'instrument de dosage constitué d'une pipette. Cette approche vise à adapter la forme de la pipette à la main de l'utilisateur, pour qu'elle se tienne plus aisément dans la main et puisse être manipulée plus facilement.

D'autres approches pour réduire la fatigue et les problèmes associés visent à diminuer la force nécessaire pour effectuer l'aspiration et l'éjection du liquide.

Lors du dosage avec une pipette manuelle comportant un embout jetable, placé sur la pointe inférieure de la pipette, l'utilisateur enfonce d'abord un piston en appuyant avec son pouce sur un bouton doseur contre la force d'un ressort qui se trouve à l'intérieur du corps de la pipette, et plonge l'embout dans un liquide. Ensuite, l'utilisateur lâche lentement la pression exercée sur le bouton doseur, qui, poussé par l'action du ressort, retourne à sa position initiale en aspirant le liquide à l'intérieur de l'embout jetable.

L'aspiration du liquide est réalisée à l'aide d'un vide, qui est créé au moment où le piston logé à l'intérieur de la pipette, enfoncé par l'intermédiaire du bouton doseur, remonte à l'intérieur du corps de la pipette vers sa position de butée haute. Pour qu'un vide soit créé, on utilise généralement un joint, qui forme une étanchéité entre la paroi intérieure du cylindre de la pipette et le piston.

Le fonctionnement de l'aspiration et de l'éjection du liquide au moyen d'un piston logé de manière étanche à l'intérieur d'un cylindre est à l'origine des forces nécessaires pour effectuer le dosage de liquides. Premièrement, le joint est agencé de façon à exercer une force d'appui normale N au piston, ou, s'il est logé sur le piston, sur la paroi intérieure du cylindre. De cette manière cette force d'appui génère une force de frottement (F = µ.N, µ étant le coefficient de frottement et N la force normale d'appui) créée entre le joint et le piston, cette friction étant la résultante de N nécessaire au maintien de l'étanchéité. Elle dépend des caractéristiques mécano-géométriques du joint.

On comprend que le ressort, qui est employé pour repousser le piston à sa position originale de butée haute, doit être suffisamment fort pour surmonter le frottement exercé par le joint sur le piston. La force de frottement parallèle à la surface du piston et résultante de la force d'appui nécessaire à l'étanchéité, de son côté, s'oppose à tout déplacement du piston. Plus le ressort est fort, plus un utilisateur emploie sa force pour actionner le bouton doseur, donc plus vite il se fatigue.

Des efforts ont été entrepris pour diminuer la force du ressort, pour que le bouton doseur puisse être enfoncé plus aisément par un utilisateur. Cependant, pour pouvoir utiliser un ressort moins fort, il faudrait diminuer la force d'appui N et donc le frottement exercé par le joint, ce qui, par conséquent tend à augmenter le risque de fuite, c'est-à-dire, par exemple, le risque que le vide ne soit pas maintenu lors de l'aspiration de liquide.

Dans l'état de la technique on utilise souvent un joint annulaire en caoutchouc ou en élastomère nommé O-ring ou joint torique pour réaliser une étanchéité entre le piston et la paroi du cylindre. On peut citer le document US 6926867 comme exemple. Avec un joint O-ring à section pleine, le frottement résultant est relativement élevé sur les matières plastiques, même en présence de lubrification. En outre, les tolérances de joint sont proportionnellement d'autant plus importantes que les dimensions sont plus petites. Ceci se manifeste par un taux de compression et une pression de contact variables et parfois élevées pour garantir l'étanchéité. La réduction des tolérances sur le joint O-ring et son logement sont possibles, mais engendrent des augmentations des coûts de fabrication et de contrôle. Enfin, avec les joints O-ring, le contrôle de la force de frottement F résultante est difficile. Une valeur minimale et constante, par diminution de la pression de contact reste difficilement atteignable sans augmentation de la probabilité de fuite.

Au vu de ce qui précède, la présente invention a pour but la réduction de la force de frottement exercée par un joint destiné à réaliser l'étanchéité entre le piston et la paroi intérieure du cylindre du dispositif. La présente invention a également pour but un joint qui maintient une étanchéité comparable à celle des dispositifs de l'état de la technique tout en diminuant la force de frottement.

De manière plus générale, l'invention a pour but la réduction de la fatigue subie par l'utilisateur lors du dosage répétitif de liquides.

L'invention a également pour but la mise en oeuvre d'une solution qui puisse être réalisée sur des dispositifs de différentes tailles. En particulier, la présente invention a pour but la mise en oeuvre d'un système d'étanchéité pour dispositifs de dosage de petite taille, adaptés à des pistons de faible diamètre, en diminuant la force de frottement tout en maintenant une bonne étanchéité. Dans ce contexte l'état de la technique propose souvent des joints logés sur le piston. Ces joints ont le désavantage d'être difficiles à produire et à monter dans le dispositif lorsque le piston a un petit diamètre, ce qui est le cas des pipettes à petit volume, par exemple des pipettes pour le dosage de volumes de l'ordre de un à 200 microlitres.

La présente invention a également pour but la mise en oeuvre d'une solution qui soit utilisable non seulement dans le domaine des dispositifs de dosage manuel, mais également dans celui des dispositifs électroniques. Avec les pipettes électroniques, par exemple, une force de frottement réduite permettrait d'utiliser un moteur de puissance inférieure et donc plus économique et donc d'augmenter l'autonomie des batteries comme le nombre total de pipetages. La présente invention a encore pour but la mise en oeuvre d'une solution qui puisse être utilisée avec des pipettes monocanal ou avantageusement à plusieurs canaux pour réduire la force d'activation totale résultante.

### Résumé de l'invention

La présente invention concerne un dispositif de dosage manuel de liquides, comprenant un cylindre et un piston logé à l'intérieur du cylindre, le dispositif étant agencé de façon que, lors du dosage, le piston se déplace le long de son axe pour effectuer l'aspiration ou l'éjection du liquide, le dispositif comprenant en outre un joint logé dans le cylindre et agencé de façon à réaliser une étanchéité entre le cylindre et le piston.

Selon un mode de réalisation préféré du dispositif selon l'invention, lors du dosage, le joint reste fixe par rapport au déplacement du piston et comprend au moins deux parties formées de portions matérielles spécifiquement conformées pour optimiser localement les fonctions de glissement et d'étanchéité sur le piston, comme de fixation étanche contre le cylindre.

Selon un mode de réalisation du dispositif selon l'invention, le joint comprend une première partie qui coopère avec la paroi intérieure du cylindre et assure les fonctions d'étanchéité contre la surface intérieure du cylindre et de fixation à ce dernier, et une deuxième partie qui est en contact avec le piston, et qui assure les fonctions d'étanchéité entre le joint et le piston et de glissement entre ces deux pièces. Ces deux parties, remplissant des fonctions différentes, ont des formes et/ou dimensions différentes.

Selon un autre aspect, l'invention concerne un dispositif de dosage manuel de liquides, comprenant un cylindre, un piston coulissant dans le cylindre à l'encontre et sous l'effet de la force d'un ressort, et un joint logé entre une paroi intérieure du cylindre et une paroi extérieure du piston, **caractérisé en ce que** le joint est une pièce annulaire conformée avec des parties annulaires respectivement périphériques et intérieures distinctes.

De préférence la partie périphérique est agencée pour un accrochage fixe à la dite paroi intérieure du cylindre et la dite partie intérieure est agencée pour un glissement continu et étanche contre la paroi extérieure du piston, cette dernière étant cylindrique.

### Description des figures

La figure 1 représente un joint pour le dispositif de dosage selon un premier mode de réalisation de l'invention, ce joint étant représenté en perspective.
La figure 2 représente le joint de la figure 1 en coupe axiale.
La figure 3 représente un joint de la figure 1 en élévation verticale.
La figure 4 montre en coupe axiale un cylindre, un piston et un joint d'un dispositif selon l'invention.
La figure 5 est une vue à échelle agrandie du détail C de la figure 4.
La figure 6 montre schématiquement, à plus grande échelle et en coupe axiale un détail du joint montré aux figures 4 et 5.
La figure 7 est une vue en perspective d'un joint selon un deuxième mode de réalisation de l'invention.
La figure 8 est une vue en coupe axiale du joint de la figure 7.
la figure 9 est une vue en élévation verticale du joint de la figure 7.
La figure 10 est une vue à échelle agrandie du détail C de la figure 8.
La figure 11 est une coupe axiale partielle d'un troisième mode de réalisation du dispositif de l'invention.
La figure 12 est une vue agrandie du détail C du dispositif représenté à la figure 11.
La figure 13 est une coupe axiale d'un quatrième mode de réalisation du dispositif de l'invention.
La figure 14 est une vue agrandie du détail C du dispositif de la figure 13.
La figure 15 est une coupe axiale d'un quatrième mode de réalisation du dispositif de l'invention.
La figure 16 est une vue agrandie du détail C du dispositif de la figure 15.
La figure 17 est une coupe axiale d'un cinquième mode de réalisation du dispositif de l'invention.
La figure 18 est une vue agrandie du détail C du dispositif de la figure 17.
La figure 19 est une coupe axiale d'un sixième mode de réalisation du dispositif de l'invention.
La figure 20 est une vue agrandie du détail C du dispositif de la figure 19.
La figure 21 est une coupe axiale d'un septième mode de réalisation du dispositif de l'invention.
La figure 22 est une vue agrandie du détail C du dispositif de la figure 21.
La figure 23 est une coupe axiale d'un premier mode de réalisation d'une deuxième forme d'exécution du dispositif de l'invention.
La figure 24 est une vue agrandie du détail C du dispositif de la figure 23.
La figure 25 est une coupe axiale d'un deuxième mode de réalisation de la deuxième forme d'exécution du dispositif de l'invention.
La figure 26 est une vue agrandie du détail C du dispositif de la figure 25.
La figure 27 est une coupe axiale d'un troisième mode de réalisation de la deuxième forme d'exécution du dispositif de l'invention.
La figure 28 est une vue agrandie du détail C du dispositif de la figure 27.
La figure 29 est une coupe axiale d'un quatrième mode de réalisation de la deuxième forme d'exécution du dispositif de l'invention.
La figure 30 est une vue agrandie du détail C du dispositif de la figure 29.
La figure 31 est une coupe axiale d'un cinquième mode de réalisation de la deuxième forme d'exécution du dispositif de l'invention.
La figure 32 est une vue agrandie du détail C du dispositif de la figure 31.
La figure 33 est une coupe axiale d'un sixième mode de réalisation de la deuxième forme d'exécution du dispositif de l'invention.
La figure 34 est une vue agrandie du détail C du dispositif de la figure 33.

### Description détaillée des différentes modes de réalisation de l'invention

La description qui suit est donnée à titre illustratif et non-limitatif et se réfère aux figures annexées qui représentent à titres d'exemples plusieurs formes d'exécution du dispositif de dosage selon l'invention.

Dans le contexte de cette description, les indications de lieu "haut", "bas", "inférieur", "supérieur", "extérieur", "intérieur", "horizontal", et "vertical" se comprennent directement par rapport au dessin tel que montré dans une figure mise en page. Dans les figures les objets sont montrés dans leur orientation naturelle, c'est-à-dire dans l'orientation qu'ils assument si on tient le dispositif de dosage dont il font partie dans une position d'utilisation. Par exemple, une pipette monocanal comprenant un axe principal est orientée de manière que cet axe soit vertical. C'est également le cas d'un doseur pour bouteille placé sur une bouteille, ou une pipette manuelle dans son porte-pipette.

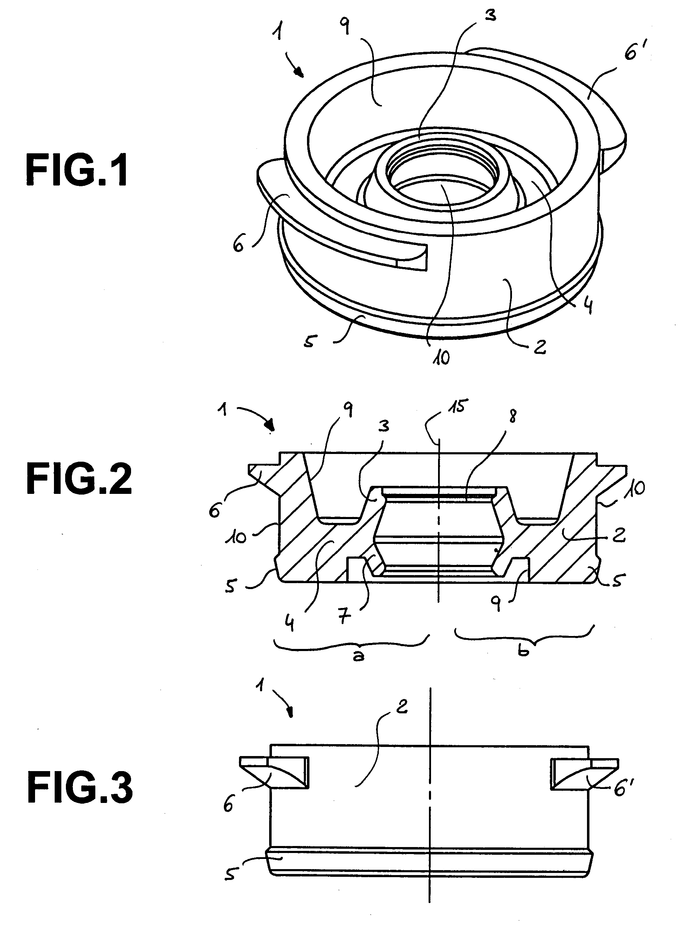

Les figures 1-3 représentent un joint prévu pour une pipette selon une première forme d'exécution du dispositif de l'invention, ce joint étant représenté respectivement en perspective, en coupe axiale et en élévation verticale aux fig. 1, 2 et 3. Le joint 1 comprend plusieurs parties 2, 3, 4, 5, 6, 7, de formes différentes remplissant chacune une fonction spécifique comme expliqué ci-après.

La partie 2, la plus volumineuse, forme un corps annulaire rigide de profil et constant sur tout son pourtour. Elle fonctionne comme support pour les autres parties et permet l'ancrage ferme du joint 1 à l'intérieur du cylindre d'une pipette. Elle comprend vers le bas et l'extérieur de son pourtour un rebord légèrement élargi 5, destiné à créer un contact étanche avec la paroi intérieure du cylindre de la pipette, comme il sera décrit en relation avec la deuxième forme d'exécution. Deux ailettes saillantes 6, 6' diamétralement opposées, s'étendent en saillie de la surface extérieure cylindrique du corps 2 du joint 1, vers le bord supérieur de celui-ci. Ces ailettes contribueront à l'ancrage du joint dans le cylindre de la pipette.

Les parties 3, 4, 7 sont entourées par le corps 2. La partie 4 forme une connexion annulaire horizontale entre le bord intérieur 9 du corps 2 et deux lèvres 3 et 7 d'épaisseur réduite destinées à glisser en contact avec la face cylindrique extérieure d'un piston formant l'élément actif de la pipette. La lèvre supérieure 3 est orienté en biais vers le haut, tandis que la lèvre inférieure 7 est orientée en biais vers le bas.

Les bords extrêmes des deux lèvres annulaires 3 et 7 définissent la dimension d'une ouverture 8 au centre du joint 1, cette ouverture ayant une forme circulaire si l'on regarde le joint d'en haut. On comprend que le joint 1 des fig. 1 à 3 est destiné à être logé et engagé à l'intérieur du cylindre et qu'un piston traversant le joint sera également logé dans le cylindre d'une pipette. Le profil de ce joint, en coupe diamétrale selon la fig. 2, possède un axe de symétrie 15 qui coïncidera avec l'axe de symétrie de la pipette et comporte deux moitiés symétriques a et b avec chacune une zone massive 2,5 fixée au cylindre et une zone flexible 4, 3, 7 conformée pour un contact glissant avec la face externe du piston de la pipette. Il importe que le contact entre les lèvres 3, 7 et le piston soit étanche mais avec une résistance de frottement aussi faible que possible alors que le corps 2 doit être rigidement fixé au cylindre. Pour la matière du joint 1, on choisira de préférence un élastomère convenable permettant une mise en forme précise par moulage.

Les différences de fonctions attribuées aux différentes parties du joint explique la forme dissymétrique de chacune des parties a et b de part et d'autre de l'axe de symétrie et distingue le dispositif selon l'invention des joints pour pipettes du type O-ring ou X-ring de l'état de la technique.

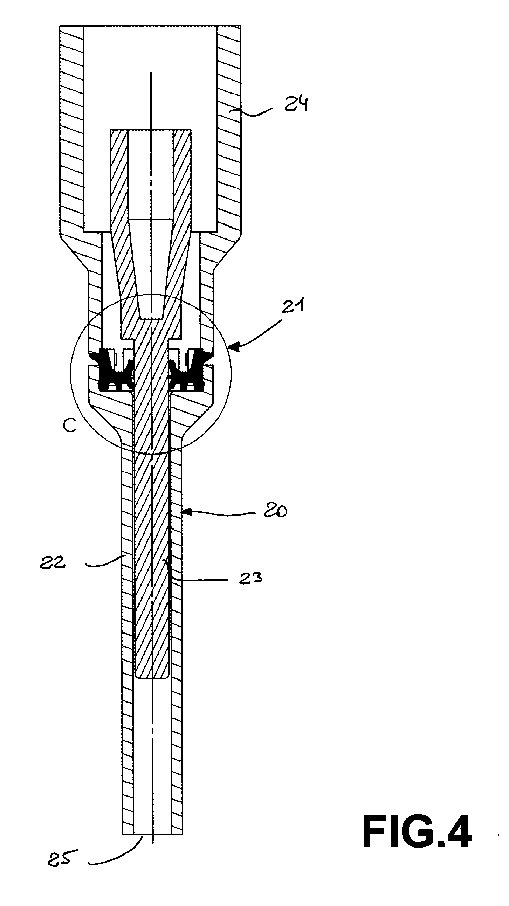

On considère maintenant les fig. 4 à 10 qui représentent un dispositif de dosage selon une deuxième forme d'exécution de l'invention.

La figure 4 montre en coupe axiale les éléments d'une pipette destinée à être actionnée à la main. Cette pipette comporte un piston 23 qui est logé de façon à pouvoir coulisser dans un cylindre 20 constitué d'une partie inférieure 22 séparée par un joint 21 d'une partie supérieure 24. Pour que la pipette soit fonctionnelle, le joint 21 crée une étanchéité entre la partie inférieure 22 et la partie supérieure 24 du cylindre 20. Tandis que la figure 4 montre le piston 23 en une seule pièce, comme on l'obtient, par exemple, dans un procédé de moulage, le cylindre 20 peut être fait de deux pièces 22, 24 différentes, susceptibles d'être liées à l'aide d'un filetage. L'espace libre à la base du cylindre 20 a pour fonction de permettre l'aspiration d'air par l'ouverture 25 du liquide dans lequel un embout fixé sur la base du cylindre 20 est plongée lorsque le piston 23 remonte dans le cylindre. L'effort d'aspiration est maintenu grâce à l'étanchéité offerte par le joint 21, comme expliqué au début.

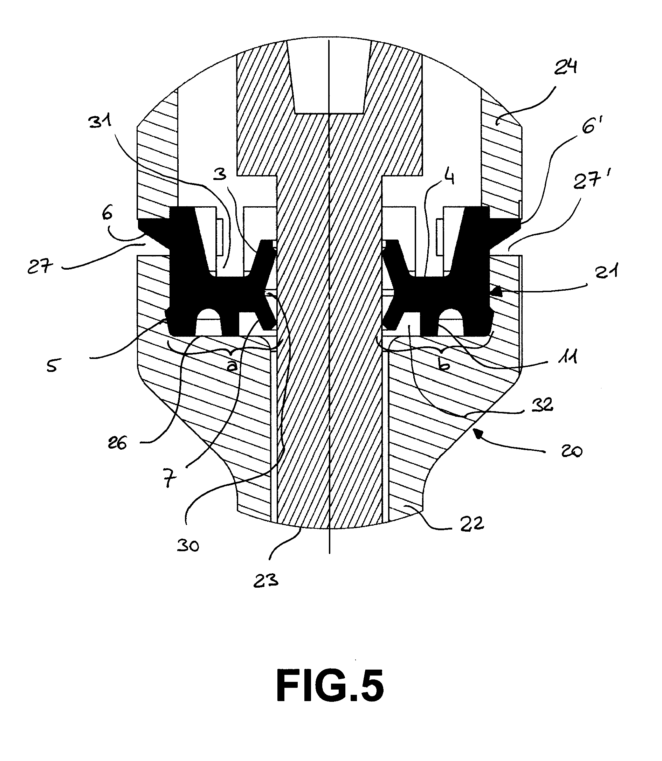

La fig. 5 montre à échelle agrandie et en coupe axiale semblable à la fig. 4 la disposition du joint 21 entre les deux parties supérieure et inférieure 22 et 24 du cylindre 20. Le joint 21 est logé à l'intérieur du cylindre 20, juste au passage entre les parties inférieure 22 et supérieure 24. Si ces deux parties sont réalisées en deux pièces séparées, le joint pourrait être logé dans la partie inférieure 22 ou dans la partie supérieure 24, la condition pour cette dernière possibilité étant que la connexion (éventuellement par filetage) entre les deux pièces 22, 24 soit elle-même étanche.

A la fig. 5 l'extrait indiqué avec la lettre C de la figure 4 illustre le logement du joint 21 dans le cylindre 20. La vue en coupe axiale montre, comme à la figure 2, les profils des deux sections (a) et (b) symétriques du joint annulaire, et on peut donc constater une certaine parenté avec le joint 1 des figures 1-3, les parties correspondantes portant les mêmes signes de référence. Le joint 21 des figures 4 et 5 comporte ainsi le corps 2, la liaison plane 4 et les lèvres 3 et 7 circulaires, dans lesquelles la face cylindrique lisse du piston 23 glisse en les déformant élastiquement. La partie annulaire plane 4 est ici, à la différence des figures 1-3, pourvue d'une nervure cylindrique 11 s'étendant dans la partie inférieure du corps 2 du joint. Elle ménage des évidements et améliore la séparation fonctionnelle entre la fixation du joint au cylindre 20 et la zone flexible d'étanchéité contre le piston 23.

Un évidemment (ou une poche d'air) est une échancrure et/ou un bombement, qui crée des zones d'épaisseur réduites, ces zones définissant les transitions entre les parties différentes, en particulier entre les parties remplissant des fonctions différentes.

La partie inférieure 22 du cylindre 20, présente à son extrémité supérieure un logement à fond plat 26 qui reçoit le joint 21 et empêche tout déplacement vertical de ce dernier vers le bas du cylindre 20. Un déplacement vertical vers le haut est empêché principalement par les ailettes 6, 6' en forme de sections d'anneau faisant saillie du corps 2. Ces ailettes sont engagées dans des ouvertures 27, 27' qui traversent les parois du cylindre 20. Le corps 2 est suffisamment rigide pour empêcher un déplacement du joint 21 lorsqu'une force orientée verticalement vers le haut est appliquée sur ce dernier.

Pour augmenter l'étanchéité entre le joint 21 et la paroi intérieure du cylindre 20 le rebord 5 du joint, définissant un périmètre légèrement supérieur à celui du corps 2 exerce une pression sur la paroi intérieure du cylindre 20. La force à l'origine de cette pression peut être relativement élevée, car aucun déplacement relatif entre le joint et le cylindre n'est prévu lors du fonctionnement du dispositif de dosage. Selon l'invention grâce à la conformation du joint la force exercée par celui-ci sur la paroi intérieure du cylindre 20 est découplée de la force d'appui exercée par le même joint sur le piston 23. Cette dernière lui est largement inférieure.

La figure 5 montre également que les lèvres 3 et 7 entourent le piston 23 et créent ainsi un contact étanche avec le piston. Grâce à l'épaisseur réduite des lèvres 3 et 7 par rapport à la partie rigide 2 du joint, et grâce à l'orientation des lèvres, qui comporte une partie verticale, l'homme de métier appréciera que la pression exercée sur le piston est inférieure, même sensiblement inférieure à la pression et force exercées par le joint 21 sur la paroi intérieure du cylindre 20. L'homme du métier notera plus particulièrement que, en comparaison avec un joint torique, le joint 21 comporte plusieurs évidements 31, 32, qui découplent ses différentes parties et permettent ainsi d'obtenir les avantages de l'invention. En particulier, il est possible de diminuer la force de frottement exercé par le joint sur le piston 23.

Les lèvres 3 et 7 du joint montré à la figure 5 forment un espace fermé 30, qui peut servir comme réservoir pour un lubrifiant. L'utilisation d'un lubrifiant à cet endroit permet de diminuer la force de frottement au démarrage par rupture d'adhésion entre le joint 21 et le piston 23 suite à une période de repos prolongée, où le dispositif n'aurait pas été utilisé. La flexibilité des lèvres aux zones de contact avec le piston engendre des microdéformations qui permettent également de recréer rapidement le film intercalaire lubrifiant.

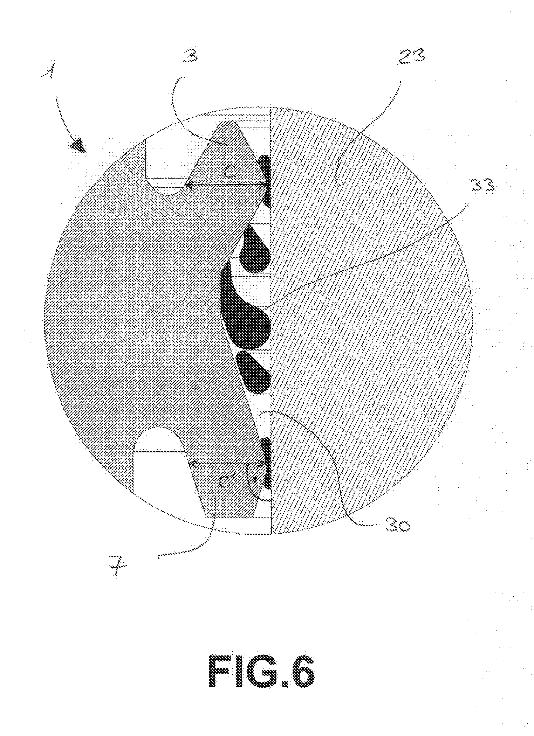

L'espace fermé 30 est montré à plus grande échelle à la figure 6, où la présence d'un lubrifiant 33 est visible. Le lubrifiant 33 se trouve en particulier dans la zone de contact entre une lèvre 3 et 7 du joint 21 et le piston 23. Le film lubrifiant empêche/reporte dans le temps la création des forces d'adhésion et diminue le frottement entre le joint et le piston 23 ce qui a comme conséquence que la force nécessaire pour déplacer le piston 23 dans une direction verticale est comparativement plus petite.

On a indiqué à la figure 6, les épaisseurs c, c' des lèvres 3, 7 du joint 21. Chacune de ces épaisseurs est mesurée à un endroit de contact entre la lèvre et le piston dans une direction perpendiculaire à l'axe du piston. Cette épaisseur (ou distance) est petite en comparaison des dimensions du joint ou du corps 2 du joint (visible aux figures 1, 2, 5). Selon un mode de réalisation du joint de l'invention, la distance c (et/ou c') est inférieure à 1 mm, de préférence inférieure à 0.7 mm, inférieure à 0.5 mm et/ou même à 0.5 mm. Cette épaisseur s'applique de préférence, à l'ensemble ou à une partie majeure de la surface de la zone de contact entre le joint et le piston. C'est le découplage des différentes parties du joint comme détaillé ci-dessus qui permet une si faible "épaisseur de contact" entre le joint et le piston 23 et qui permet ainsi de diminuer la force d'appui et de frottement imposée par le contact étanche entre le joint 21 et le piston 23. En conséquence, les forces de ressort nécessaires au pipetage peuvent être diminuées, la manipulation répétitive du dispositif de dosage selon l'invention devient moins fatigante, le risque de crispation, de tensions musculaires, tendinites et/ou de douleurs musculaires en général réduit.

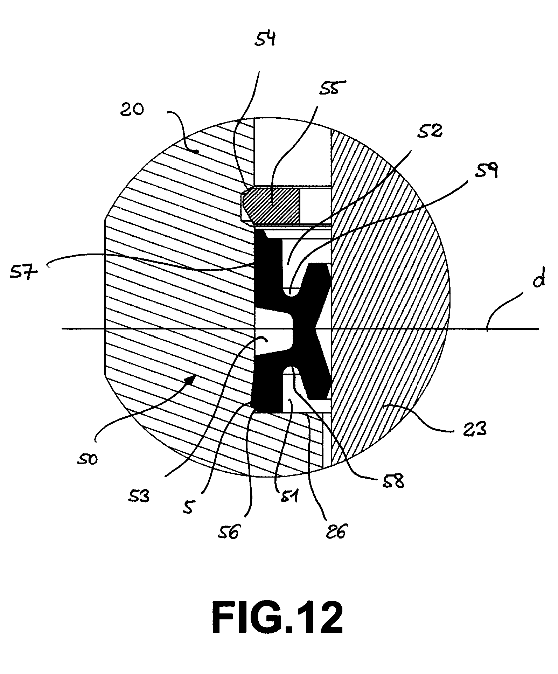

Selon un mode de réalisation, c'est une zone de liaison entre la partie remplissant la fonction d'ancrage du joint dans son siège et/ou d'étanchéité contre la paroi du cylindre et la partie qui remplit la fonction d'étanchéité avec le piston qui comporte une épaisseur diminuée comme indiqué ci-dessus. Dans ce cas, ce n'est pas nécessairement la lèvre même qui réalise le découplage les fonctions, mais la structure qui relie les parties qui remplissent les différents fonctions. Prenant l'exemple du joint 1 illustré à la figure 2, cela peut être la connexion annulaire 4 qui est caractérisée par une épaisseur telle que définie en rapport avec la lettre c et/ou c' ci-dessus. Il convient de constater, que dans ce cas, l'épaisseur mesurée est l'épaisseur minimale entre deux parties, notamment entre la partie d'ancrage et étanchéité contre le cylindre (par exemple, la partie 2 de la figure 2) et la partie d'étanchéité contre le piston (par exemple, les lèvres 3 et 7 des figures 2 ou 5). Un exemple avec une connexion à petite épaisseur est montrée à la figure 12, ou des connexions 58 et 59 sont plus fines que les lèvres formant le contact avec le piston. A la figure 12, c'est grâce à un évidement 53, que l'épaisseur de la connexion entre les fonctions est diminuée.

Les modes de réalisation illustrés dans les figures suivantes permettent également de bénéficier des avantages susmentionnés, qui ne seront donc pas systématiquement répétés.

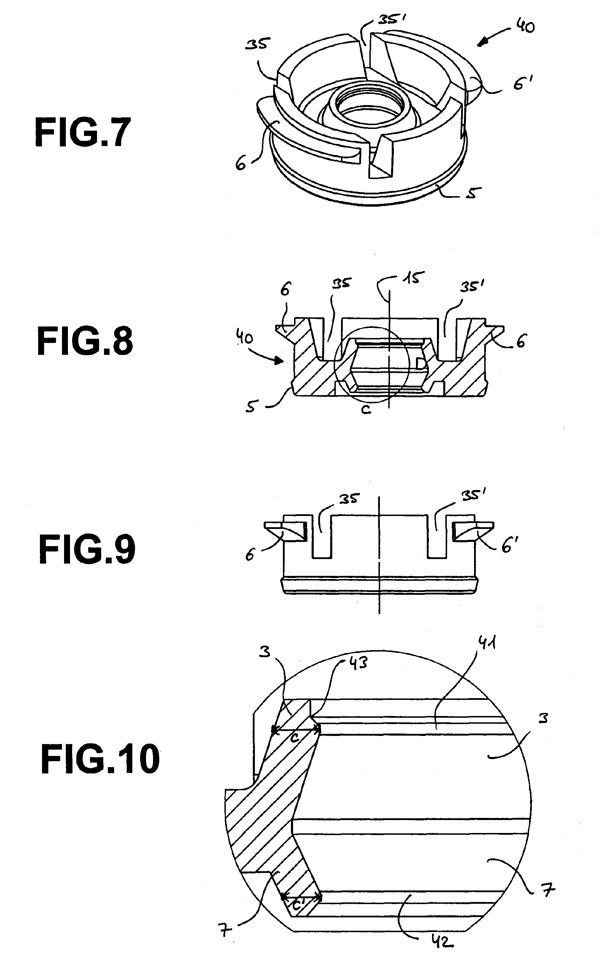

Les figures 7 à 9 montrent, en perspective, en coupe axiale et en élévation verticale ainsi qu'en coupe partielle agrandie à la fig.10 , un joint 40 qui diffère du joint 1 montré aux figures 1-3, par le fait qu'il comprend en plus deux incisions transversales et parallèles 35, 35' qui traversent le joint dans des directions verticales d'en haut jusqu'à peu près au milieu du joint 40, s'arrêtant au niveau de la connexion interne 4 entre le corps 2 et les lèvres 3 et 7. Les incisions 35, 35' affectent la partie supérieure du corps massif 2 et sont effectuées de façon à creuser quatre évidements dans la paroi de ce corps 2, en dehors mais au voisinage des extrémités des ailettes 6, 6'. Les incisions 35,35' sont des fentes verticales qui passent à égales distances de l'axe de symétrie central 15 du joint 40.

Les quatre évidements créés par les incisions 35, 35' facilitent l'insertion du joint 1 dans son logement en permettant le déport des ailettes 6, 6' et de la partie haute du corps 2 associé vers l'intérieur du joint. De cette façon, les ailettes 6, 6' facilitent l'insertion du joint dans son logement à l'intérieur du cylindre 20. En effet le joint doit être inséré par une ouverture supérieure de ce cylindre 20 et à travers un passage ayant un diamètre intérieur qui est presque identique au diamètre du joint 40, en particulier au diamètre défini par le bord supérieur du corps 2. Comme les incisions 35, 35' ne dépassent pas, vers le bas dans le joint 40, la connexion plane interne 4 et n'arrivent donc pas non plus au niveau du rebord 5, les incisions 35, 35' n'interfèrent pas avec la fonction d'étanchéité contre la paroi intérieure du cylindre 20. La partie du joint 40 qui est plus haute que la connexion interne 4 remplit alors, en plus de la fonction d'ancrage du joint dans son logement à l'aide des ailettes 6, 6', une fonction de flexibilité ou de souplesse facilitant l'insertion du joint lors de l'assemblage de la pipette.

La figure 10 est une vue en coupe partielle agrandie de la figure 8, indiquée dans cette dernière avec un cercle. Les caractéristiques mises en évidence dans la figure 10 sont également présentes sur le joint 1 des figures 1-3, mais ne sont pas indiqués dans ces figures en considération de la petite taille de ces caractéristiques.

On reconnaît alors à la figure 10 une zone de contact 41, formée par une partie de la lèvre supérieure 3, dont la surface, de faible hauteur est en forme de cylindre creux. Il convient de noter que la faible hauteur de cette surface de contact 41 signifie que l'ensemble de cette surface de contact est réduite. L'homme du métier apprécie en particulier que la réduction de la surface de contact entre le joint 40 et le piston 23 équivaut à une diminution de la force de frottement par adhésion au repos et lors d'un déplacement relatif entre ces deux éléments. A la figure 10, on reconnaît en particulier un segment de profil asymétrique 43 de la lèvre 3, incurvé de façon à la fois à déterminer et à minimiser la surface de contact 41.

La figure 10 montre encore une zone de contact 42 de la lèvre inférieure 7 avec le piston 23 (non représenté). Le profil de cette lèvre 7 ne présente pas l'allure concave asymétrique 43 de la lèvre supérieure 3, mais la zone de contact 42 est néanmoins clairement définie et délimitée par rapport au reste de la lèvre 7.

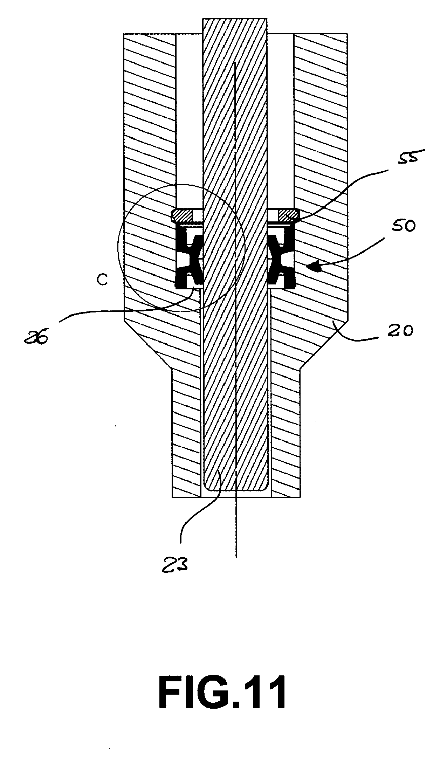

Les figures 11 et 12 montrent en coupe axiale générale et en coupe axiale partielle et agrandie un mode de réalisation de l'invention comprenant un joint 50. Le joint 50 est plus simple que les joints 1, 40, discuté ci-dessus, mais comprend également deux lèvres qui sont en contact avec le piston 23. Si l'on considère (fig.12) le profil du joint dans une coupe axiale limitée à une moitié de l'ensemble par rapport à l'axe du piston on s'aperçoit du fait que le joint 50 est moins asymétrique que les joints précédents 1, 40. Il saute aux yeux que le joint 50 présente en fait un plan de symétrie perpendiculaire à l'axe de la pipette et qui dans le plan de la fig. 12 se réduit à un axe de symétrie d particulier au profil représenté à cette figure. Extérieurement et au contact avec le cylindre 20 de la pipette, le joint 50 comporte deux segments de corps 56 et 57. Les deux segments ne sont pas symétriques par rapport à l'axe d à cause de la présence du rebord 5 sur le segment de corps 53 et d'une structure légèrement déviante sur le segment de corps 57 opposé. La face extérieure cylindrique des segments de corps 56 et 57 est en contact avec le cylindre 20. Intérieurement c'est - à- dire en contact avec le piston 23 le joint possède deux lèvres également symétriques par rapport à l'axe d. Entre les éléments de support 56 et 57 s'étend un évidemment 53 qui délimite deux jonctions ou connexions flexibles 58 et 59. Si on ignore les quelques petites différences dans les parties 56 et 57, responsables pour l'ancrage du joint dans son logement, on identifie un seul axe de symétrie d.

Le support creux 2, présent dans les joints 1 et 40, est transformé en deux parties de support 56 et 57, agencées l'une verticalement au-dessus de l'autre et séparées par un évidemment 53. Cet évidemment 53 crée deux jonctions 58, 59 approximativement horizontales, qui joignent les parties de support 56 et 57 aux lèvres. La finesse des jonctions 58, 59 détermine le découplage mécanique entre la rigidité des parties de support 56 et 57 à volume relativement grand et les lèvres souples.

A ce stade il convient de préciser que les joints 1, 40 et 50 sont constitués en une seule pièce et fabriqués en un seul matériau, généralement un élastomère. Les différences en rigidité et/ou souplesse des différents parties des joints sont dues aux épaisseurs différentes de ces parties ou encore au volume occupé par le matériau par et dans ces parties.

On trouvera plus loin des modes de réalisation où les différences de rigidité qui permettent de remplir des fonctions différentes sont obtenues par des matériaux différents placés dans différentes parties d'un même joint.

Vers le haut, le joint 50 est retenu dans son logement à l'aide d'un anneau de maintien 55, qui est placé dans une encoche 54 du corps de pipette 20. Lors de l'assemblage du dispositif de dosage, le joint 50 est inséré par une ouverture supérieure dans le cylindre 20 et engagé jusque sur le rebord intérieur 26. Ensuite, l'anneau de maintien 55 est inséré et arrêtée à l'encoche 54. Ainsi, les éléments de support 56 et 57 relativement rigides réalisent le placement fixe et immobile du joint 50 à l'intérieur de son logement dans le cylindre 20.

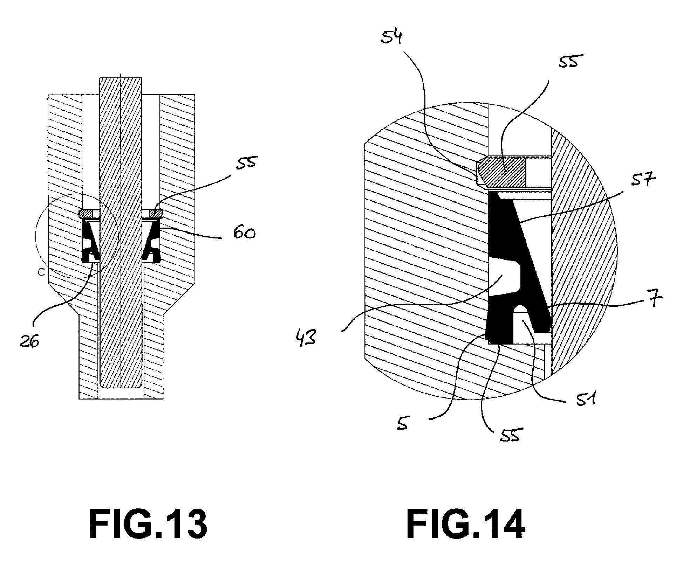

Les figures 13 et 14 montrent également respectivement en coupe axiale générale et partielle agrandie un mode de réalisation de l'invention comprenant un joint 60 à une seule lèvre 7, réalisée à l'image d'une lèvre inférieure des modes de réalisation précédents (les joints 1, 40 et 50). La structure générale de ce joint 60 a plusieurs parties en commun avec le mode de réalisation montré dans les figures 11 et 12, et les parties correspondantes sont indiqués avec les mêmes numéraux de référence.

Contrairement aux réflexions faites ci-dessus par rapport à la symétrie du joint montré dans les figures 11 et 12, la demi-section du joint 60 montré à la figure 14 ne présente aucun axe de symétrie. La lèvre 7 unique a une fonction d'étanchéité moindre lors du retour du piston (aspiration = vide partiel, coussin d'air en extension ΔP-) alors que lors du dosage (piston déplacé vers le bas), elle tend à être renforcée par création d'une surpression ΔP+ en assurant une expulsion complète.

Selon un mode de réalisation alternatif de l'invention (non-représenté sur les dessins), le joint comprend une seule lèvre, similaire à la situation montrée aux figures 13 et 14, avec la différence que la lèvre unique est orientée vers le haut, en correspondance avec une lèvre supérieure d'un des modes de réalisation décrit ci-dessus. Ce mode de réalisation a également ses avantages, puisque la lèvre unique orientée vers le haut a une fonction d'étanchéité élevée lors du retour du piston, ce qui est important. Lors de l'aspiration du liquide, la réduction du frottement obtenue par élimination de la lèvre supérieure est un avantage.

Il est clair que chez un joint à deux lèvres, dont une lèvre supérieure et une inférieure, comme montré aux figures 1-12, on obtient les deux avantages détaillés ci-dessus.

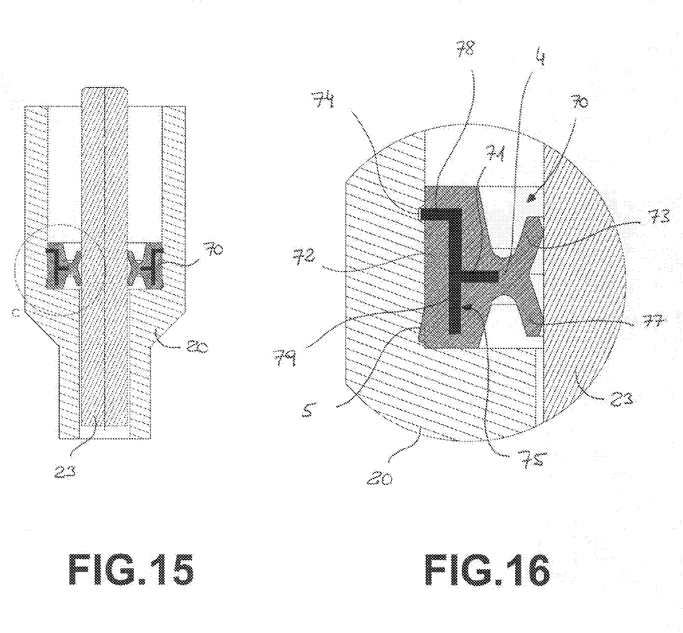

Les figures 15 et 16 montrent un mode de réalisation selon l'invention, comprenant un joint 70 dont la partie support 72 en forme de cylindre creux comporte et entoure en grande partie un élément de stabilisation 78, rigide constitué en un matériau différent et plus rigide que le reste du joint 70, par exemple une âme métallique. Ce dernier est donc constitué en deux matériaux différents. Le matériau 78 plus rigide noyé dans une partie du joint 70 qui joue le rôle de support de l'ensemble des éléments, assure leur ancrage et leur placement stable dans le logement.

La lèvre inférieure 77 et la lèvre supérieure 73 du joint 70 sont symétriques ( fig. 16 : demi section d'une coupe axiale). Au contraire la partie extérieure de la demi-section 72, massive, présente un rebord d'étanchéité 5, fonctionnant comme discuté ci-dessus, et contient l'élément de stabilisation 78 de forme dissymétrique. Cet élément comprend plusieurs parties qui, dans la vue en coupe radiale de la figure 16 apparaissent en forme de bras 79, 71, 78, mais qui constituent, en considération de la forme tridimensionnelle de cet élément 75, un court élément tubulaire 79, et deux extensions en forme de d'anneaux plats 71, 78 de diamètres différents, respectivement liées au centre et à l'extrémité supérieure du tube 79, et orientées l'une vers l'intérieur et l'autre vers l'extérieur du cylindre. L'anneau extérieur 78 traverse le corps en matériau moins rigide du joint 70 pour s'engager dans une rainure 74 dans la paroi intérieure du cylindre 20, pour ainsi ancrer le joint 70 dans le cylindre creux 20. De cette façon, l'extension supérieure 78 fonctionne de manière analogue à la rondelle de maintien 55 de la figure 12. Dans le mode de réalisation selon les figures 15 et 16 cette "rondelle de maintien 55" constituée par l'extension 78 est partie intégrante du joint 70. De cette façon, l'utilisation d'un élément 78 en un deuxième matériau, plus rigide que le matériau de base dans lequel les lèvres sont formées, permet à la fois (a) d'obtenir une fonction support plus rigide, accomplie par le cylindre support 72, et (b), au moins en partie, l'ancrage du joint 70 à l'intérieur du cylindre à l'aide de l'interaction entre les éléments 78 du joint et 74 de la paroi du cylindre 20

En d'autres termes, contrairement aux joints de l'état de la technique, la présente invention concerne également des joints fabriqués en une pièce en plusieurs matériaux de rigidités différentes. Ces rigidités différentes permettent la formation de parties du joint qui renforcent son ancrage dans le cylindre, par exemple par leur interaction avec des points d'arrêts, tels qu'une rainure ou des ouvertures, présents dans le cylindre 20.

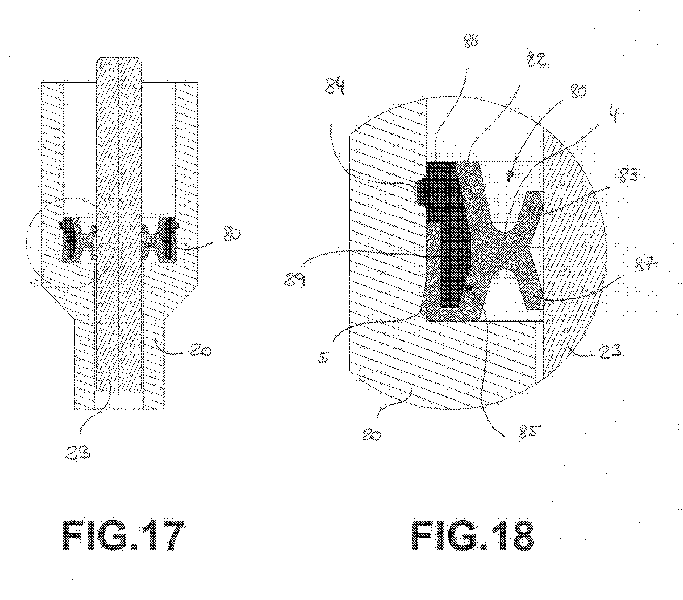

Les figures 17 et 18 montrent un autre mode de réalisation de l'objet de l'invention, selon lequel, comme pour le mode de réalisation montré dans les figures 15 et 16, le joint 80 est constitué d'une seule pièce mais comprend des parties fabriquées en matériaux différents. Comme aux figures 15 et 16, un des matériaux est plus rigide que l'autre. Dans les figures 17 et 18 c'est le tube 85, qui est entouré ou noyé en grande partie et supporte un matériau élastique assurant les fonctions d'étanchéité contre le piston 23 et le cylindre 20.

Comme on peut voir à la figure 18, l'élément rigide 85 comporte un renflement supérieur 88, qui dépasse le matériau moins rigide dont sont constituées les lèvres 83 et 87 ainsi que d'autres parties du joint caractérisées par leur élasticité. Ce renflement supérieur 85 est formé de manière à pouvoir s'engager dans une rainure 84 de la paroi du cylindre 20 afin de bloquer ou arrêter le joint dans le cylindre.

Les joints montrés par les figures 15 et 16 ou 17 et 18 peuvent être fabriqués, par exemple par surmoulage, bi-injection ou autre procédé composite. En variante, les deux éléments peuvent être fabriqués séparément, et la partie moins rigide peut être engagée sur la partie rigide, par exemple. Bien entendu, d'autres possibilités de fabrication existent et peuvent être choisie par l'homme du métier.

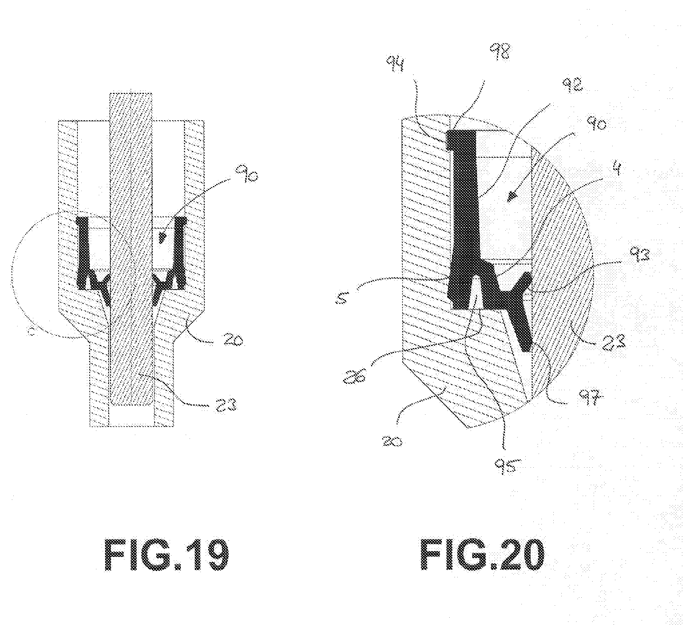

Les figures 19 et 20 montrent un autre mode de réalisation de la présente invention. Le joint 90 comporte une pièce tubulaire de support 92 avec une forme plus allongée que les réalisations précédentes. L'élément de connexion 4 part d'une région voisine de la base du tube de support 92 et débouche dans les deux lèvres 93 et 97, qui, dans le mode de réalisation montré aux figures 19 et 20, sont façonnées différemment, la lèvre inférieure 97 étant un peu plus allongée que la lèvre 93.

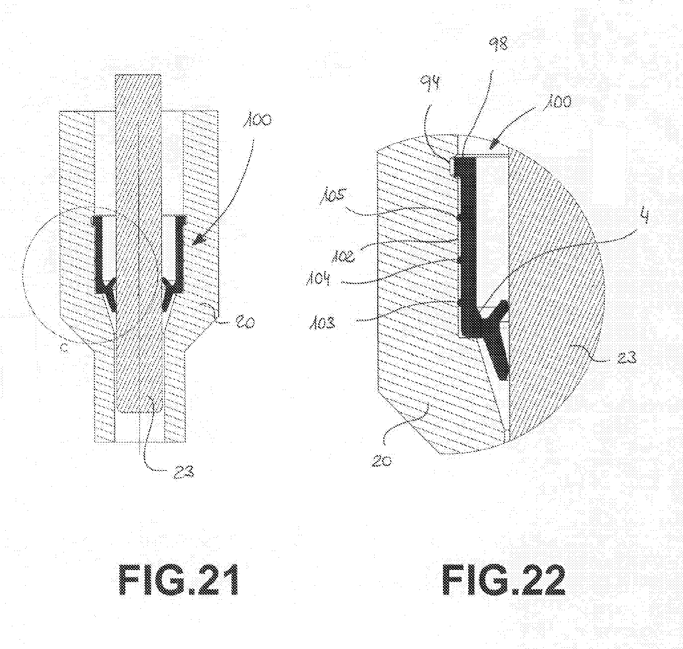

Dans la vue des figures 19 et 20, le tube de support 92 est plus mince que dans les modes de réalisation précédents. Ce type de réalisation permet une fixation sans ouvertures en paroi de cylindre. Il est avantageux, par exemple, pour les joints de petites taille mis en place dans des sièges « profonds » de cylindres, par exemple pour des pipettes multicanaux. Pour des raisons de contraintes de démoulage, une rainure de fixation en partie supérieure et proche de l'entrée du cylindre est privilégiée. La stabilité et la fonction de support sont réalisées en partie par la longueur de la partie tubulaire 92 dont les zones d'appui périphérique en 5 et 94 sont en compression. Le même principe s'applique au mode de réalisation montré aux figures 21-22, décrit ci-dessus.

Vers son extrémité supérieure, le cylindre de support 92 comporte un rebord extérieur 98, qui coopère avec une rainure 94 dans le cylindre de façon à renforcer l'ancrage du joint 90 dans le cylindre 20 du dispositif du dosage.

Le mode de réalisation selon les figures 19 et 20 est en outre caractérisé par le fait que la zone de connexion 4 en forme de collerette interne part du tube de support 92, décrit d'abord une courbe vers le bas et s'appuie sur le rebord interne 26 du cylindre 20. Ensuite la collerette 4 se partage en deux lèvres 93 et 97, comme décrit ci-dessus. Ainsi, un évidement 95 est formée entre la collerette 4 et l'extrémité inférieure du tube support 92, séparant idéalement les fonctions support et étanchéité avec la paroi du cylindre 20 de celle d'étanchéité sur le liseré 5 avec le piston 23.

Les figures 21 et 22 montrent un mode de réalisation avec un joint 100 similaire à celui des figures 19 et 20, mais en différant par le fait que la collerette interne 4 du joint 100 part de l'extrémité inférieure du tube de support 102. En plus, le joint 100 comporte une pluralité de nervures d'étanchéité 103, 104 et 105 sur la surface extérieure du tube de support 102. Ces nervures d'étanchéité en compression remplacent le rebord élargi 5 des modes de réalisation précédents et assument la fonction d'étanchéité contre la paroi intérieure du cylindre 20.

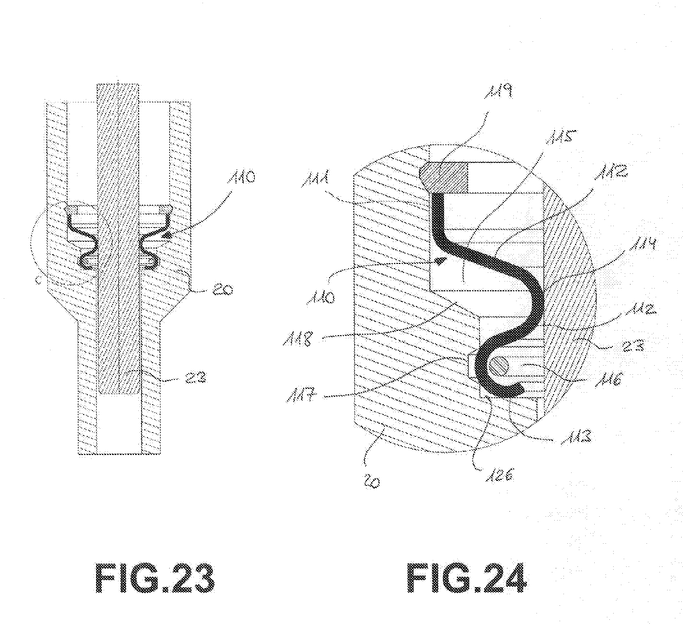

Les figures 23 et 24, ainsi que les figures suivantes, concernent des modes de réalisation qui diffèrent des modes de réalisation précédents par l'absence de lèvres telles que les lèvres 93 et 97, par exemple. La fonction d'étanchéité contre le piston 23 est accomplie par une partie qui, selon le demi-profil montré à la figure 24, par exemple, a la forme d'une ligne incurvée 112, 114 orientée vers l'axe du piston et dont la zone proximale renflée 114 est en contact avec le piston. Vu en trois dimensions, ce type de joints est un élément tubulaire dont la partie centrale a une forme sinueuse similaire à un soufflet.

La forme et l'agencement du joint 110 dans son logement du cylindre 20 sont tels qu'une grande poche d'air 115 est présente, remplissant une très grande partie du volume annulaire compris entre le cylindre et le joint à l'opposé du piston. L'homme du métier appréciera que grâce à cet évidement, la pression et par conséquent la force de frottement exercée sur le piston est fortement réduite par rapport à un corps rigide en matériau polymère, comme avec les O-rings, tout en gardant une bonne étanchéité.

Le mode de réalisation des figures 23 et 24 montre un joint 110, dont la partie centrale 112, 114 est incurvée vers le centre, et le milieu 114 de la courbe touche légèrement le piston 23 en réalisant ainsi une connexion étanche à faible force de frottement ou à faible pression d'appui. La partie inférieure et la partie supérieure113 et 111 de l'élément tubulaire sont agencées de façon à remplir les autres fonctions du joint comme décrit ci-après.

La partie inférieure du joint 110 est agencée de façon à former une connexion étanche avec la paroi intérieure du cylindre 20. A cet effet, un anneau rigide 116 en métal ou polymère rigide, par exemple, pousse la partie inférieure 113 vers la paroi du cylindre 20. Une rainure ou creusure 117 se trouve dans la paroi du cylindre 20, arrêtant ou bloquant l'anneau rigide 116. De cette manière, le joint 110, et en particulier sa partie inférieure 113, sont immobilisés dans le cylindre.

L'extrémité supérieure 111 du joint 110 est redressée à une forme cylindrique et est arrêtée par un anneau de maintien 119, bloquée comme les rondelles de maintien décrites ci-dessus.

On notera encore que, selon le mode de réalisation montré aux figures 23 et 24, le profil de la face intérieure du cylindre 20, comporte un rétrécissement 118 diminuant son diamètre intérieur au niveau du logement du joint. L'étendue de ce rebord 118 permet de contrôler, par exemple de rapprocher, la position de la partie inférieure 113 et de l'anneau 116 par rapport au piston 23. De cette manière, la force de frottement et le glissement exercé par le joint sur le piston peuvent être mieux ajustés.

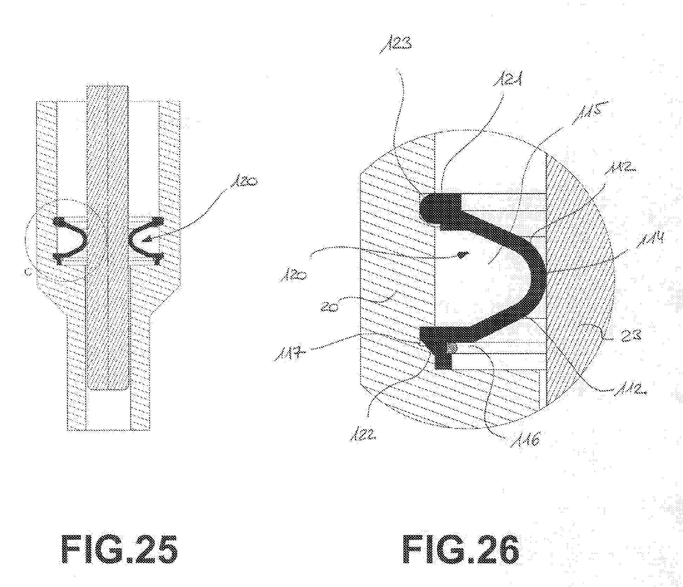

Les figures 25 et 26 montrent un joint 120 fondé sur le même concept que celui des figures 23 et 24, avec, cependant, quelques différences de réalisation. En particulier, la rondelle de maintien 119 destinée à bloquer le mouvement vertical vers le haut du joint 110 des figures 23 et 24 est absente aux figures 25 et 26. A sa place une structure élargie 121 de l'extrémité supérieure du joint 120, caractérise cette réalisation en lui donnant une rigidité élevée de sorte qu'elle peut alors assumer la fonction d'ancrage du joint 120 vers le haut. A cet effet, la structure élargie 121 est engagée dans une rainure 123 de la paroi intérieure du cylindre 20, bloquant tout déplacement vertical de la partie supérieure du joint 120.

La partie inférieure 112 du joint comporte également un élargissement 122, qui coopère avec une rainure 117, comme décrit dans le paragraphe précédent pour l'extrémité supérieure du joint 120. Cependant, pour assurer une connexion étanche entre le joint 120 et la paroi intérieure du cylindre 20, une bague rigide 116 est prévue pour presser la partie inférieure 122 du joint vers la face intérieure du cylindre 20.

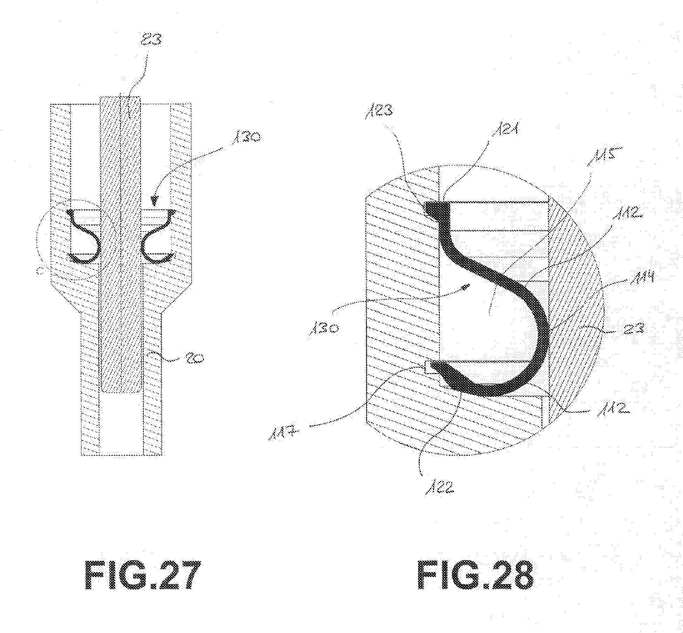

Les figures 27 et 28 montrent d'autres variantes du joint selon le concept décrit par rapport aux figures 23-26. En principe, l'étanchéité du joint 130 contre le piston 23 est réalisée selon les figures 23-26, mais l'ancrage dans le logement du cylindre 20 est modifié, par modification des extrémités du joint 130.

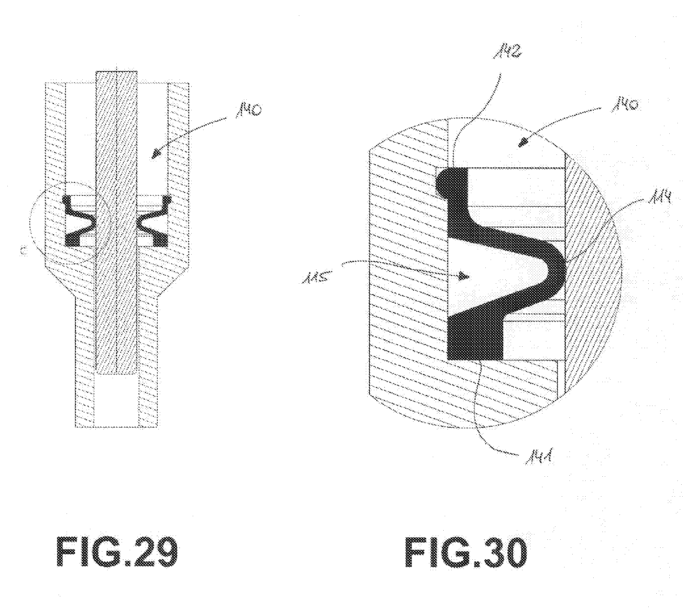

Tel est également la cas dans le mode de réalisation des figures 29 et 30, qui montrent un joint 140 avec une extrémité inférieure 141 suffisamment volumineuse et donc rigide pour assurer à la fois l'ancrage du joint dans son logement et l'étanchéité contre la paroi intérieure du cylindre 20. Un anneau ou une bague rigide comme aux figures 23-26 n'est plus nécessaire.

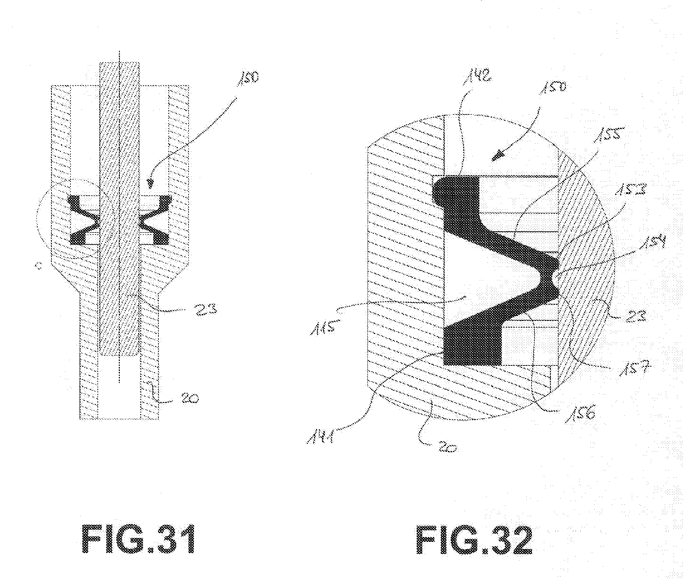

Les figures 31 et 32 montrent une variante des concepts des figures 23-30, en ce que la forme incurvée orientée vers l'axe du piston et dont la zone proximale est en contact avec le piston comporte, dans la vue du demi- profil de la figure 32, deux sommets, formant points de contact 153 et 157 arrondis et créant un espace fermé 154 limité par le joint 150 et le piston 23. En considérant l'ensemble joint 150, cylindre 20 et piston 23 en trois dimensions, il est clair que les points de contact 153 et 157 sont en effet des anneaux ou cylindres creux de contact, coaxiaux au piston 23 et situés dans des plans parallèles l'un à l'autre. De même, l'espace fermé 154 a la forme tridimensionnelle d'un anneau.

L'espace fermé 154 du joint 150 a la même fonction que l'espace fermé 30 montré, par exemple, à la figure 5 ou en plus de détails à la figure 6. Cet espace sert donc en tant que réservoir de lubrifiant et contribue ainsi au bon glissement lors du déplacement vertical du piston 23 le long de son axe lors du dosage.

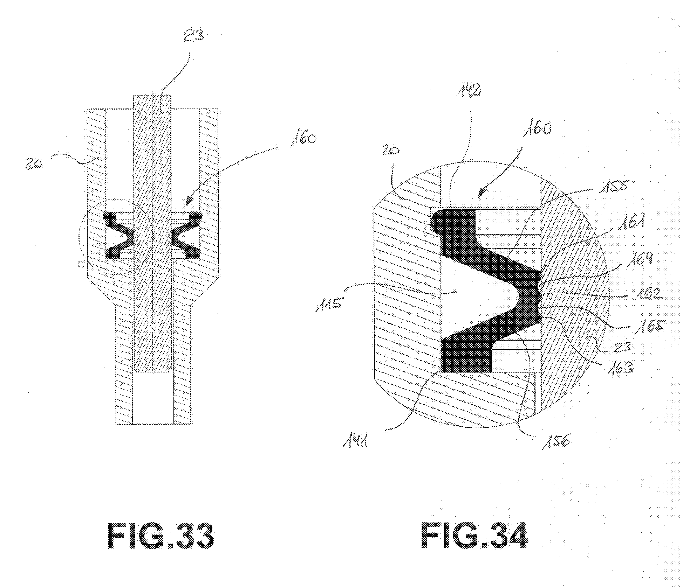

Les figures 33 et 34 montrent une extension du principe montré aux figures 31 et 32, avec un joint 160 comprenant, selon le demi-profil de la figure 34, trois points de contact 161, 162, 163 arrondis avec le piston 23 enfermant deux espaces fermés 164 et 165. Comme dans les deux exemples précédents, les points de contact se trouvent dans une zone centrale du joint limitée vers le haut et vers le bas par des portions du joint 160 en forme de parois coniques 155 et 156 inversées.

On notera que l'ensemble du joint 160 est relativement rigide, y compris dans la zone incurvée, mais que ce fait est compensé en partie par les zones de contacts arrondies 161, 162, 163 qui sont petites et facilement déformables au démarrage du piston, ce qui permet la régénération du film d'interface lubrifiant et réduit la force de frottement par zone de contact.

Pour la réalisation des joints selon l'invention, on peut utiliser, par exemple, des élastomères moulé du type FPM, de préférence pour tenue en température de 15 à 150°C, ce qui constitue la plage d'utilisation/stérilisation usuelle pour les instruments de laboratoire. Des exemple parmi ces élastomères sont le silicone, le "butyl rubber", les copolymères de éthylène et propylène, vinylidène fluoride et le copolymère de hexachloropropylène, entre autres.

Selon l'invention, des procédés complémentaires sont envisagés pour encore réduire les forces de frottement d'un élastomère, en particulier celles d'adhésion au repos (création en surface de groupes réactifs de répulsion). Un traitement périphérique du joint et/ou l'adjonction de lubrifiants internes (solides ou liquides) sont des techniques selon l'invention. On peut citer, entre autres, la création de microréservoirs de lubrifiant par « sablage/cryogénisation », l'halogénisation ou la transformation structurelle moléculaire de surface par projection plasma ainsi que l'incorporation d'éléments « d'alliage » dans la matrice, ces éléments étant choisis, par exemple, parmi les poudres fluorées et/ou les lubrifiants. Si un lubrifiant est utilisé, il peut intervenir en simple addition ou être greffé. On le choisit de préférence avec un haut poids moléculaire.

Dans le cas où le joint comprend un élastomère incluant, dans sa matrice, un élément d'alliage, la proportion en volume dudit élément d'alliage sera choisie inférieure ou égale à 30%, de préférence inférieure ou égale à 25%, du volume total de l'élastomère.

Selon un mode de réalisation du dispositif selon l'invention, au moins une partie du joint est réalisée en un matériau ayant une dureté inférieure à 75 Shore A. De préférence, la dureté Shore A du matériau sera entre 30-75, ou encore de 40 à 70. De préférence, toute partie en contact étanche avec le piston sera caractérisée par les valeurs de dureté Shore indiquées ci-dessus. Par exemple, les lèvres montrées aux figures 2, 4-6, 8, 10 et 11-22, ou les zones de contacts 114 des figures 23-30, et 153, 157, 161, 162, 163 des figures 31-34, seront constituées d'un matériau ayant les caractéristiques de Shore indiquées si-dessus.

Comme indiqué ci-dessus, le dispositif selon l'invention est caractérisé par l'utilisation d'un joint comprenant des parties à caractéristiques géométriques différentes et/ou à volumes différents. Grâce aux caractéristiques du joint il est possible de réduire la force de frottement exercée par le joint sur le piston. La force de frottement doit être << F_{ressort,} qui repousse le piston et dont le niveau est ajusté pour garantir la précision de contact contre les butées mécaniques déterminant les bonnes performances volumétriques. La force de frottement dépend en général également de la taille du piston et/ou du volume pipetté. Selon la présente invention, on obtient alors des forces de frottement (Fₛₜₐₜ = µₛₜₐₜ x N et/ou F_{dyn} = µ_{dyn} x N) de l'ordre de 2-5 N pour des volumes maximaux allant jusqu'à 100 ml. Pour des volumes plus petits, en particulier des volumes maximaux de environ 10 à 20 ml, la force de frottement peut être réduite jusqu'à environ 1 N. Enfin, pour les volumes maximaux de ≤ 1000µl, la force de frottement est ≤ 0.6 N, de préférence ≤ 0.5 N, ≤ 0.4 N et même ≤ 0.35 N. Ces forces de frottement réduites permettent l'utilisation d'un ressort ayant des forces plus faibles.

Les dispositifs de l'invention permettent de doser des volumes entre 1 µl à 200 ml. Par exemple, le dispositif de l'invention peut être une pipette ou un doseur pour le dosage de volumes de 1 à 1000 µl, 0.1 ou 0.2 à 2 ml, 0.1 ou 0.5 à 5 ml, et/ou de 1 à 10 ml.

Selon un autre exemple, le dispositif de l'invention peut être une micropipette réglable couvrant un volume choisi dans les plages de 50-1000 µl, 10-200 µl, 1-100 µl, 1-50 µl, et 0.5-10 µl.

De préférence, le matériau est stérilisable à des températures d'environ 121 à environ 134°C.

Le diamètre du piston du dispositif peut être, par exemple, de 1.5 à 10 mm. De préférence, le piston du dispositif a un diamètre inférieur à 6 mm, de préférence < 5 mm, voire < 4 mm, voire < 3.5 mm, voire < 3 mm.

Les variations de pression autour de la pression de travail (pression atmosphérique de environ 1 bar) ne dépassent en général pas les environ ± 0.2 bar, de préférence 0.1 bar, voire 0.05 bar, selon le volume.

## Revendications

1. Dispositif de dosage manuel de liquides, comprenant un cylindre et un piston logé à l'intérieur du cylindre, le dispositif étant agencé de façon que, lors du dosage, le piston se déplace le long de son axe pour effectuer l'aspiration ou l'éjection du liquide, le dispositif comprenant en outre un joint logé dans le cylindre et agencé de façon à réaliser une étanchéité entre le cylindre et le piston, ***caractérisé en ce que*** lors du dosage, le joint reste fixe par rapport au déplacement du piston; et, le joint comprend au moins deux parties formées de portions à caractéristiques géométriques et/ou mécaniques dédiées permettant d'optimiser localement les fonctions de glissement, étanchéité et de fixation dans le cylindre.

2. Dispositif selon la revendication 1, le joint comprenant une première partie qui coopère avec la paroi intérieure du cylindre et qui remplit les fonctions d'étanchéité du joint directement contre la surface intérieure du cylindre au niveau d'un siège du joint et de la fixation du joint dans le cylindre, et une deuxième partie qui est en contact avec le piston, qui remplit les fonctions d'étanchéité du joint contre le piston et de glissement entre le joint et le piston.

3. Dispositif selon l'une quelconque des revendications 1 et 2, **caractérisé en ce que** l'épaisseur de la deuxième partie du joint, mesurée à un endroit de contact avec le piston, dans une direction perpendiculaire au piston à partir d'un point de contact, est inférieure ou égale à 1 mm.

4. Dispositif selon l'une quelconque des revendications 1 à 3, **caractérisé en ce que** le joint comprend au moins un évidement permettant de découpler les fonctions.

5. Dispositif selon l'une quelconque des revendications précédentes, **caractérisé en ce qu'**au moins une partie du joint est réalisé en un matériau ayant une dureté en Shore A inférieure à 75.

6. Dispositif selon l'une quelconque des revendications précédentes, **caractérisé en ce que** le joint a une forme annulaire comprenant une partie extérieure et une partie intérieure, la partie extérieure étant plus rigide que la partie intérieure.

7. Dispositif selon la revendication 1, **caractérisé en ce que** le profil du joint en coupe radiale par rapport à l'axe du piston comporte au plus un axe de symétrie.

8. Dispositif selon l'une des revendications 1 ou 2, constituant une pipette, un doseur pour bouteille et/ou une seringue.

9. Dispositif selon l'une quelconque des revendications précédentes, **caractérisé en ce que** le joint est réalisé d'une seule pièce, éventuellement composée de plusieurs matériaux différents.

10. Dispositif selon l'une quelconque des revendications précédentes, **caractérisé en ce que** le joint est agencé de façon à constituer au moins une, de préférence au moins deux zones distinctes de contact avec le piston.

11. Dispositif selon la revendication 5, **caractérisé en ce que** le joint est agencé de façon à former un espace fermé entre les deux zones de contact et **en ce que** cet espace fermé contient un lubrifiant destiné à réduire les forces d'adhérence et de frottement entre le piston et le joint lors d'un déplacement du piston par rapport au cylindre.

12. Dispositif selon l'une quelconque des revendications précédentes, **caractérisé en ce que** le joint est un X-ring asymétrique.

13. Dispositif selon la revendication 7, **caractérisé en ce que** la dite première partie du joint est plus volumineuse et/ou plus rigide que la dite deuxième partie du joint.

14. Dispositif selon l'une quelconque des revendications 1 à 7, **caractérisé en ce que** le joint présente en coupe radiale par rapport à l'axe du piston au moins une partie de forme incurvée orientée vers l'axe du piston et dont la zone proximale est en contact avec le piston.

15. Dispositif selon la revendication 9, **caractérisé en ce que** le joint présente en coupe radiale par rapport à l'axe du piston une suite de plusieurs parties de forme incurvées orientées vers l'axe du piston et dont les parties proximales sont en contact avec le piston.

16. Dispositif selon l'une des revendications 9 ou 10, **caractérisé en ce que** le joint est retenu dans l'espace entre la paroi intérieure du cylindre et le piston à l'aide d'au moins un anneau de maintien (55), des ouvertures (27, 27'), et/ou des rainures (74).

17. Dispositif selon l'une quelconque des revendications précédentes, **caractérisé en ce que** la force de frottement (Fₛₜₐₜ = µₛₜₐₜ x N et/ou F_{dyn} = µ_{dyn} x N) imposée par le joint appuyant contre la surface du piston et nécessaire pour déplacer le piston relatif au joint, est inférieure à F_{dyn} et/ou Fₛₜₐₜ ≤ 2N.

18. Dispositif de dosage manuel de liquides, comprenant un cylindre, un piston coulissant dans le cylindre à l'encontre et sous l'effet de la force d'un ressort, et un joint logé entre une paroi intérieure du cylindre et une paroi extérieure du piston, **caractérisé en ce que** le joint est une pièce annulaire conformée avec des parties annulaires respectivement périphérique et intérieure distinctes, la partie périphérique étant agencée pour un accrochage fixe à la dite paroi intérieure du cylindre et la dite partie intérieure étant agencée pour un glissement continu et étanche contre la paroi extérieure du piston, cette dernière étant cylindrique.
